# EUROPÄISCHE PATENTSCHRIFT

(11) **EP 2 008 011 B1**
(45) Veröffentlichungstag und Bekanntmachung des Hinweises auf die Patenterteilung: **10.08.2011**
(21) Anmeldenummer: 06819229.3
(22) Anmeldetag: 02.11.2006
(51) Int. Cl.: F16L 33/22, F16L 37/092

(54) **STECKVERBINDER FÜR INSBESONDERE AUS KUNSTSTOFF BESTEHENDE ROHRLEITUNGEN**
CONNECTOR FOR PIPING, IN PARTICULAR PLASTIC PIPING
CONNECTEUR POUR CONDUITES CONSTITUEES EN PARTICULIER DE PLASTIQUE

(30) Priorität: 18.04.2006 DE 202006006301 U
(43) Veröffentlichungstag der Anmeldung: 31.12.2008
(73) Patentinhaber: Voss Automotive GmbH, 51688 Wipperfürth (DE)
(72) Erfinder: LECHNER, Martin, 51789 Lindlar (DE); TERLAU, Norbert, 51515 Kürten (DE)
(74) Vertreter: Patentanwälte Dr. Solf & Zapf
(86) Internationale Anmeldenummer: PCT/EP2006/068042
(87) Internationale Veröffentlichungsnummer: WO 2007/121794

(56) Entgegenhaltungen:
- EP-A1- 0 132 319
- EP-A1- 1 199 506
- WO-A-03/031862
- DE-A1- 2 837 977
- DE-U1- 20 007 703
- DE-U1- 29 807 763
- GB-A- 2 171 770
- US-A1- 5 230 539

## Beschreibung

Die vorliegende Erfindung betrifft einen Steckverbinder für insbesondere aus Kunststoff bestehende Rohrleitungen, bestehend aus einem Gehäuseteil mit einer Steckaufnahme für eine Mediendichtung zum mediendichten Einstecken eines rohrstückförmigen Einsteckteils und für mindestens ein Halteelement zum Arretieren des Einsteckteils, wobei das Gehäuseteil zweiteilig aus einem Aufnahmeteil für das Halteelement und die Mediendichtung sowie aus einem Anschlussteil zur Anschlussverbindung des Gehäuseteils an ein Aggregat besteht und gegenüber dem Aggregat abdichtbar ist nach dem Oberbegriff des Anspruchs 1, wie er aus der DE 200 07 703 U1 bekannt ist.

Im Zusammenhang mit solchen Steckverbindern sind beispielsweise die EP 0 753 698 B1, die EP 0 733 844 B1 und die DE 203 19 959 U1 als Stand der Technik von Bedeutung, in denen verschiedene Anwendungen und konstruktive Ausführungen von derartigen oder ähnlichen bekannten Anschlussvorrichtungen beschrieben werden.

Die EP 0 733 844 B1 beschreibt dabei eine Anschlussvorrichtung zum schnellen und lösbaren Anschluss mindestens einer Kunststoff-Rohrleitung, bestehend aus einem Gehäuseteil mit mindestens einer Aufnahmeöffnung zum Einstecken der Rohrleitung sowie aus einem in der Aufnahmeöffnung angeordneten Klemmring, der zum Arretieren der Rohrleitung über einen Aussenkonus mit einem Innenkonus des Gehäuseteils zusammenwirkt, wobei das Gehäuseteil zwecks Lösbarkeit der Rohrleitung zweiteilig aus einem Basisteil und einem lösbar mit diesem verbundenen, den Innenkonus aufweisenden Einsatzteil besteht und das Einsatzteil über eine schnappbare Formschlussverbindung mit dem Basisteil verbunden ist. Hierbei ist vorgesehen, dass das Einsatzteil eine innere, umlaufende Dichtlippe zur dichtenden Anlage auf der Außenumfangsfläche der Rohrleitung aufweist, wobei die Dichtlippe sich vor dem Einstecken der Rohrleitung derart in Einsteckrichtung schräg nach innen erstreckt, dass sie durch die eingesteckte Rohrleitung etwas elastisch aufgeweitet wird und dann dichtend anliegt.

Die EP 0 753 698 B1 beschreibt eine Steckverbindung zum Anschluss von Druckmittelleitungen, bestehend aus einem Gehäuseteil mit einer eine einseitige Öffnung aufweisenden Aufnahme zum Einstecken eines insbesondere von einem Rohrleitungsende gebildeten Steckabschnittes, wobei innerhalb der Aufnahme auf der der Öffnung zugekehrten Seite mindestens ein Halteelement und von dem Halteelement ausgehend in Richtung von der Öffnung weg mindestens ein Dichtungselement angeordnet ist, und beim Einsteckvorgang des Steckabschnittes in die Aufnahme des Gehäuseteils zuerst eine Haltefunktion und im weiteren Verlauf des Einsteckvorganges zusätzlich über das Dichtungselement eine Abdichtung des Steckabschnittes gegenüber dem Gehäuseteil gewährleistet ist, wobei das Gehäuseteil einen Leckagepfad derart aufweist, dass in einer durch das Halteelement arretierten, jedoch noch nicht über das Dichtungselement abgedichteten Einsteckstellung des Steckabschnittes eine definiert begrenzte, wahrnehmbare Undichtigkeit gewährleistet ist. Hierbei ist vorgesehen, dass dem Leckagepfad ein Ventilelement derart zugeordnet ist, dass in der noch nicht über das Dichtungselement abgedichteten Einsteckstellung des Steckabschnittes einerseits das Druckmittel über den Leckagepfad nach außen treten kann, andererseits aber ein Eindringen von Schmutzpartikeln und dergleichen von außen in das Gehäuseinnere ausgeschlossen ist.

Die DE 203 19 959 U1 beschreibt einen Steckverbinder für Medienleitungen, bestehend aus einem Gehäuseteil mit einer Steckaufnahme zum mediendichten Einstecken eines rohrstückförmigen Einsteckteils, wobei in der Steckaufnahme ein Halteelement zum Arretieren sowie eine Mediendichtung zum Abdichten des eingesteckten Einsteckteils angeordnet sind, und wobei das Gehäuseteil zweiteilig aus einem Basisteil und einem mit diesem über eine schnappbare Formschlußverbindung verbundenen Einsatzteil besteht. Hierbei ist vorgesehen, dass das Basisteil seinerseits ebenfalls zweiteilig aus einem Aufnahmeteil für das Halteelement, die Mediendichtung und das Einsatzteil sowie aus einem Anschlussteil zur Anschlussverbindung des Gehäuseteils an eine Medienleitung besteht.

Gleichzeitig wird in der DE 203 19 959 U1 auch ein Steckverbinder für Medienleitungen beansprucht, der die vorstehenden Merkmale aufweisen kann, bestehend aus einem Gehäuseteil mit einer Steckaufnahme zum mediendichten Einstecken eines rohrstückförmigen Einsteckteils, wobei innerhalb der Steckaufnahme ausgehend von einer mündungsseitigen Schmutzdichtung in Einsteckrichtung gesehen zunächst ein Halteelement zum Arretieren des eingesteckten Einsteckteils und daran anschließend eine Mediendichtung angeordnet sind, wobei ein Leckagepfad derart gebildet ist, dass in einer durch das Halteelement arretierten, aber noch nicht über die Mediendichtung abgedichteten Vorarretierstellung des Einsteckteils eine definiert begrenzte, physisch wahrnehmbare Undichtigkeit gewährleistet ist. Hierbei ist vorgesehen, dass der Leckagepfad durch auf dem Außenumfang des Einsteckteils angeordnete Vertiefungen gebildet ist, die in der Vorarretierstellung einerseits im Bereich der Mediendichtung und andererseits im Bereich der Schmutzdichtung angeordnet sind.

Bei heute eingesetzten, einteiligen, Stutzen ähnlicher Art (EP 0 753 698 B1, EP 0 733 844 B1) werden üblicherweise Aufnahmeteile mit Halteelement und Dichtring in einen Metall-Einschraubstutzen eingesetzt. Der Nachteil bei diesen Steckverbindungen ist dabei, dass der Anteil an Metall sehr groß ist und daher auch die Kosten für Material und Bearbeitung entsprechend hoch sind.

Es werden daher auch zweiteilige Ausführungen mit reduziertem Metall-Anteil eingesetzt. Bei diesen, zweiteiligen, Steckverbindungen werden üblicherweise vormontierte Kunststoff-Aufnahmeteile mit Halteelement und Dichtring an Einschraubteilen befestigt, wie dies der DE 20319 959 U1 zu entnehmen ist. Diese bekannten Steckverbindungen folgen dem Grundprinzip: "Halten vor Dichten". Der Nachteil dieser Steckverbinder ist, dass außer dem Haupt-Dichtring, der das Rohr gegen das Aufnahmeteil abdichtet, ein weiterer Dichtring das Aufnahmeteil gegen das Einschraubteil dichten muss. Das verursacht einerseits hohe Kosten, und andererseits entsteht eine Stelle, an der Undichtigkeiten auftreten können.

Gemäß der DE 200 07 702 U1 sind einerseits der Anschlussstutzen und das Rohranschlussgehäuse miteinander verschraubt und sollen gegeneinander verspannt werden Andererseits wird auch der Anschlussstutzen in die Einschrauböffnung des Ventilblocks Druckbehälters oder dgl. eingeschraubt. Der Anschlussstutzen und das Rohranschlussgehäuse bestehen zu diesem Zweck aus Metall. Für die Montage und Demontage dieser Verbindung mit Hilfe von Werkzeugen sind in der einschraubseitigen Öffnung des Anschlussstutzens ein innerer Werkzeugansatz und auf dem Rohranschlussgehäuse ein äußerer Werkzeugansatz vorgesehen. Die Grundmontage am Aggregat muss also in zwei Schritten erfolgen: 1. Einschrauben des Anschlussstutzens in die Einschrauböffnung über den ersten Werkzeugansatz; 2. Aufschrauben und Verspannen des Rohranschlussgehäuses auf den Anschlussstutzen über den zweiten Werkzeugansatz Danach kann ein Rohrende eingesteckt werden. Ebenso muss die Demontage vom Aggregat gemäß in zwei Schritten erfolgen: 1. Lösen der Verspannung zwischen Rohranschlussgehäuse und Anschlussstutzen über den zweiten Werk-0zeugansatz, wobei der Anschlussstutzen in der Einschrauböffnung verbleibt; 2. Herausschrauben des Anschlussstutzens aus der Einschrauböffnung über den ersten Werkzeugansatz.

Der vorliegenden Erfindung liegt die Aufgabe zugrunde einen mehrteiligen Steckverbinder der gattungsgemäßen Art zu schaffen, der bei einer einfachen und sicheren Abdichtung eine größere Montagefreudlichkeit aufweist.

Erfindungsgemäß wird dies für einen Steckverbinder der gattungsgemäßen Art durch die Merkmale des Kennzeichens des Anspruchs 1 erreicht.

Dadurch, dass das Gehäuseteil bekanntermaßen derart geteilt ist, dass die - ohnehin an dem äußeren Verbindungsabschnitt des Anschlussteils zur Gewindeabdichtung angeordnete -Dichtung auch die Schnittstelle zwischen den Teilen des Gehäuseteils abdichtet, wird vorteilhafterweise erreicht, dass außer dem durch die Mediendichtung gebildeten Haupt-Dichtring in der Steckaufnahme für das Rohr kein weiterer Dichtring das Aufnahmeteil gegen das Einschraubteil dichten muss. Dabei sind für den erfindungsgemäßen Steckverbinder verschiedene technische Detaillösungen möglich, denen zunächst allen - ebenso nach bekannter Art - gemeinsam ist, dass die Mediendichtung, insbesondere ein Dichtring, auf der Rohr-Anschlußseite, die einzige Schnittstelle zum druckbeaufschlagtem Raum innerhalb der Steckverbindung ist.

Gemäß der vorliegenden Erfindung sind das Anschlussteil und das Aufnahmeteil verdrehfest miteinander verbunden und können daher in nur einem Schritt zusammen in einem Aggregat montiert werden. Als Effekt tritt dadurch gegenüber dem aus der DE 200 07 702 U1 bekannten Steckverbinder eine Halbierung der Montagezeit auf. Des Weiteren sind gemäß der vorliegenden Erfindung das Anschlussteil und das Aufnahmeteil 16 im Bereich der Verbindungsabschnitte verrastet oder verpresst, - nicht verschraubt. Dies führt zu einer weiteren Verkürzung der Montagezeit. Schließlich besteht in materialökonomisch günstiger Ausbildung das Aufnahmeteil aus Kunststoff. Dies ermöglicht es nämlich das Anschlussteil und das Aufnahmeteil im Bereich der Verbindungsabschnitte zu verrasten oder zu verpressen. Auch die bewirkt einen verringerten Fertigungsaufwand und ermöglicht eine vereinfachte Montage.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: einen Längsschnitt durch eine erste Ausführung eines erfindungsge- mäßen Steckverbinders,
- Fig. 2: einen weiteren Längsschnitt durch den in Fig. 1 dargestellten erfin- dungsgemäßen Steckverbinder, entlang der Linie II-II in Fig. 1,
- Fig. 3: einen Längsschnitt durch eine zweite Ausführung eines erfindungsge- mäßen Steckverbinders,
- Fig. 4: eine Stirnansicht eines Anschlussteils des in Fig. 3 gezeigten erfindungs- gemäßen Steckverbinders,
- Fig. 5: eine Seitenansicht eines Anschlussteils des in Fig. 3 gezeigten erfin- dungsgemäßen Steckverbinders,
- Fig. 6: einen Längsschnitt durch eine dritte Ausführung eines Steckverbinders, jedoch nicht erfindungsge- mäß,
- Fig. 7: einen Längsschnitt durch eine vierte Ausführung eines erfindungs- gemäßen Steckverbinders,
- Fig. 8: einen Längsschnitt durch eine fünfte Ausführung eines Steckverbinders, jedoch nicht erfindungsge- mäß,
- Fig. 9: einen Längsschnitt durch eine sechste Ausführung eines erfindungsge- mäßen Steckverbinders,
- Fig. 10: einen Längsschnitt durch eine siebente Ausführung eines erfindungsge- mäßen Steckverbinders,
- Fig. 11: einen weiteren Längsschnitt - ähnlich wie in Fig. 2 - durch eine achte Ausführung eines erfindungsgemäßen Steckverbinders.

In den verschiedenen Figuren der Zeichnung sind gleiche Teile stets mit den gleichen Bezugszeichen versehen und werden daher im Folgenden in der Regel jeweils nur einmal beschrieben.

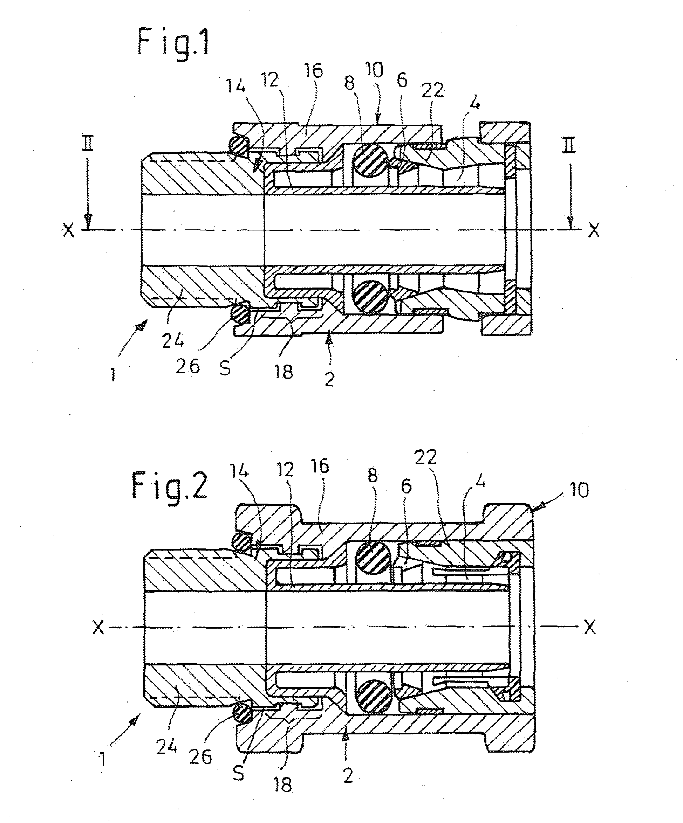

Wie sich zunächst aus Fig. 1 und 2 ergibt, besteht ein erfindungsgemäßer Steckverbinder 1 für insbesondere aus Kunststoff bestehende Rohrleitungen aus einem Gehäuseteil 2 mit einer Steckaufnahme 4 zum mediendichten Einstecken eines rohrstückförmigen (nicht dargestellten) insbesondere aus Kunststoff, wie Polyamid, bestehenden Einsteckteils, wobei in der Steckaufnahme 4 ein Halteelement 6 um Arretieren sowie eine Mediendichtung 8 zum Abdichten des eingesteckten Einsteckteils angeordnet sind. Dabei weist das Gehäuseteil 2 ein Basisteil 10 auf, welches zweiteilig aus einem Anschlussteil 14 und einem Aufnahmeteil 16 für das Halteelement 6 und die Mediendichtung 8 ausgebildet ist. Das Anschlussteil 14 besteht aus Metall, insbesondere aus Messing, und weist bevorzugt einen Einschraubstutzen 24 mit Außengewinde zur Anschlussverbindung des Gehäuseteils 2 an eine Gewindebohrung eines nicht dargestellten, beliebigen Aggregates auf. Innerhalb des Gehäuseteils 2 ist vorzugsweise noch eine Stützhülse 12 zum radial stützenden Eingriff in das Einsteckteil angeordnet.

Der Einschraubstutzen 24 des Anschlussteils 14 weist zur Abdichtung der Gewindeverbindung mit der Gewindebohrung eine Dichtung 26, insbesondere einen O-Ring auf.

Es ist vorgesehen, dass das Gehäuseteil 2 bzw. das Basisteil 10 derart in das Anschlussteil 14 und das Aufnahmeteil 16 geteilt ist, dass die den Einschraubstutzen 24 des Anschlussteils 14 umschließende, ohnehin vorhandene Dichtung 26 gleichzeitig auch den Spalt zwischen den Teilen 14 und 16 des Gehäuseteils 2 abdichtet. Eine zusätzliche Dichtung im Inneren des Gehäuseteils 2 erübrigt sich daher.

Fig. 1 und 2 zeigen des Weiteren, dass das Aufnahmeteil 16 als hülsenförmiges "Manschettenteil" ausgebildet ist, das in der dargestellten Ausführung auf das (ohne eine sechskantige Außenkontur ausgebildete) Anschlussteil 14 insbesondere verdrehsicher aufclipsbar ist und aus Kunststoff besteht. Das Kunststoffteil bildet fast das gesamte Gehäuseteil 2 bzw. Basisteil 10 und weist auch einen äußere Sechskantkontur für ein Einschraubwerkzeug auf. Das Anschlussteil 14 wird aus Richtung der Einschraubseite (Seite des Einschraubstutzens 24) in das Manschettenteil 16 eingeclipst und weist mindestens eine Fläche auf, die ein Drehmoment zum Einschrauben übertragen kann.

Die Mediendichtung 8, insbesondere ein O-Ring, zum Abdichten des in die Steckaufnahme 4 eingesteckten (nicht dargestellten) Einsteckteils ist radial zwischen dem Manschettenteil 16 und dem rohrstückförmigen Einsteckteil angeordnet. Ein mit dem Bezugszeichen 18 bezeichneter Rastbereich des Manschettenteils 16 ist dabei derart radial elastisch, dass beim Aufclipsen keine Beschädigungen entstehen.

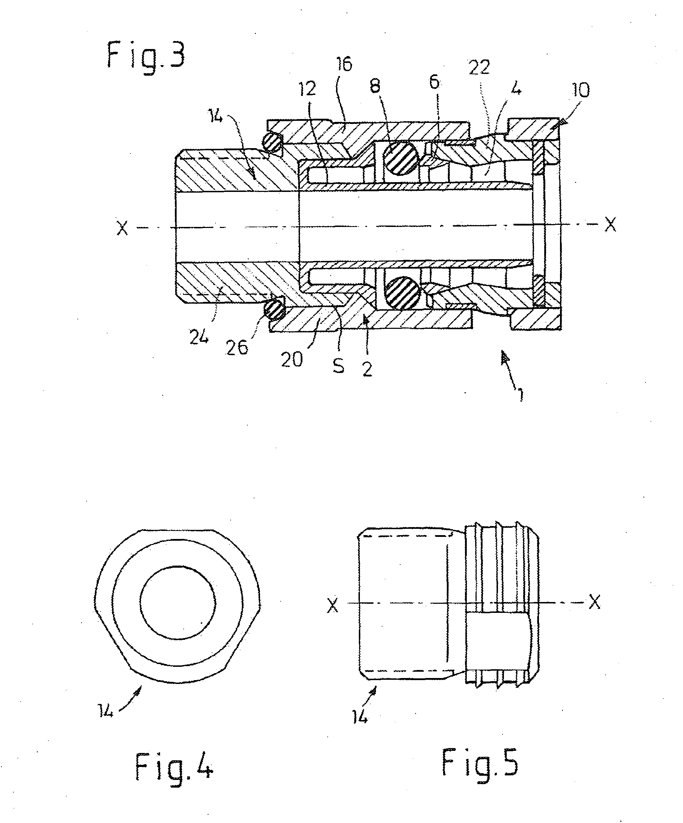

Fig. 3 bis 5 zeigen eine Ausführung der Erfindung, bei der das Basisteil 10 als ein Messing-Einschraubteil ohne Sechskant verdrehsicher in das durch ein Kunststoff-Aufnahmeteil gebildete Manschettenteil 16 eingesteckt wird. Es wird dabei insbesondere von Rippen, wie bei einer sogenannten Einpresspatrone, gehalten. Die Rippen können z. B. durch Abdrehen eines ursprünglichen Mehrkantprofils, z. B. gemäß Fig. 4 und 5 eines Dreikantprofils oder eines Sechskantprofils, erzeugt werden. Das Einschraubteil 14 wird wiederum aus der Richtung der Einschraubseite in das Aufnahmeteil 16 eingeschlagen oder eingepresst und verfügt an seiner Einschlagseite über Halterippen, die im Aufnahmeteil einen Kraft-Formschluß erzeugen. Die im Wesentlichen zylindrische Einschlagseite weist mindestens eine Fläche auf, die ein Drehmoment zum Einschrauben übertragen kann.

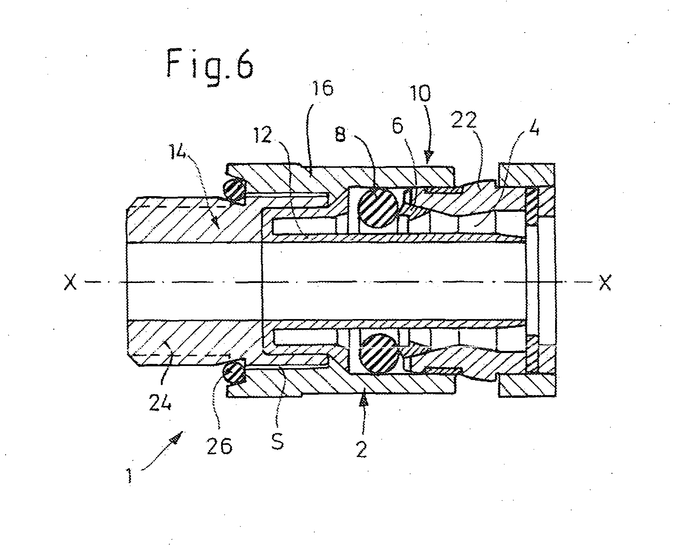

Wie Fig. 6 zeigt, kann das als Kunststoff-Aufnahmeteil ausgebildete Manschettenteil 16 auch mit dem Anschlussteil 14, das wiederum als Messing-Einschraubteil ohne Sechskant ausgebildet ist, verschraubt werden. Das Einschraubteil wird dabei aus Richtung der Einschraubseite ins Aufnahmeteil eingeschraubt. Für die Verbindung zwischen Manschettenteil und Anschlussteil kann bevorzugt ein spezielles, einen erhöhten Kraftschluss bewirkendes Gewinde zur Anwendung kommen, wie es in der DE 44 23 805 B4 beschrieben ist. Diese Ausführung ist nicht erfindungsgemäß.

Zu den vorstehend dargestellten technischen Ausführungsformen der Erfindung ist zu bemerken, dass zwischen dem Manschettenteil 16 (Aufnahmeteil) und dem Anschlussteil 14 (Einschraubteil) keine gesonderte Abdichtung erforderlich ist, da die Schnittstelle (radialer Umfangsspalt) zwischen beiden Teilen von der vorhandenen Gewindeabdichtung, d. h. der am äußeren Verbindungsabschnitt 24 des Anschlussteils 14 angeordneten Dichtung 26, abgedichtet wird. Ein wichtiges Merkmal hierbei ist, dass der Durchmesser der kupplungsseitigen Einsteckseite, bzw. der Einschraubseite so gewählt ist, dass der Gewinde-Dichtring (Dichtung 26) durch den Systemdruck nicht in eine unvorteilhafte Position gebracht werden kann.

Eine Verdrehsicherung kann außer auf die in Fig. 4 dargestellte Art auch durch Rändelungen, die verpresst werden, erreicht werden.

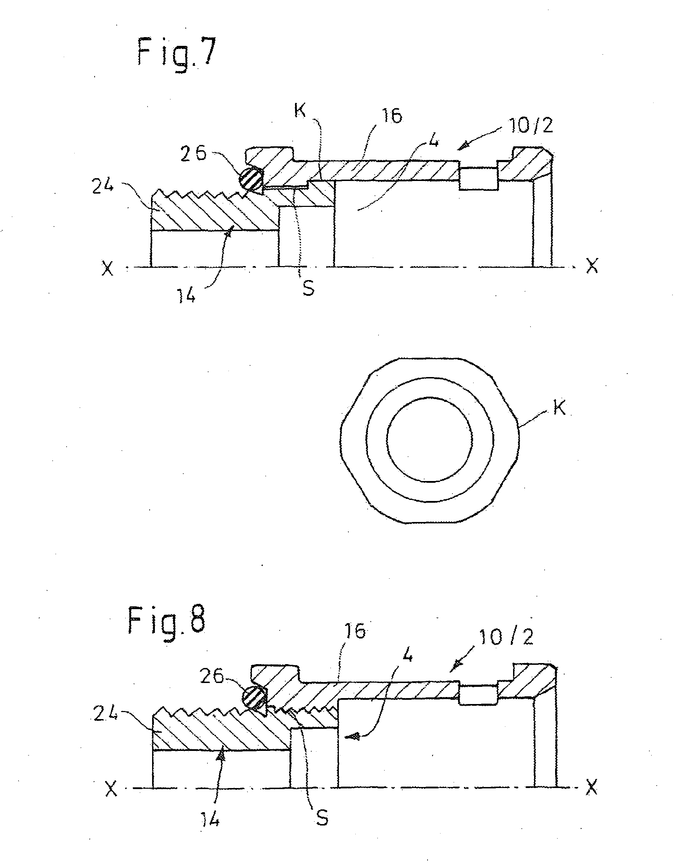

Fig. 7 und 8 zeigen weitere Steckverbinder 1. Bei der erfindungsgemäßen Ausführung gemäß Fig. 7 wird das aus Messing (Ms) bestehende Anschlussteil 14 in das aus Kunststoff (KST) bestehende Manschettenteil 16 eingeschoben bzw. gepresst. Die mit dem Bezugszeichen K bezeichnete Außenkontur ist mehrkantig, vorzugsweise sechskantig - gegebenenfalls mit abgedrehten Ecken. Bei der Montage des Verbindungsabschnitts 24 in ein Gewindeloch kann durch das Anzugsdrehmoment die Verpressung zwischen dem Anschlussteil 14 und dem Manschettenteil 16 erhöht werden. Dies ist besonderes bei Rändelungen vorteilhaft.

Bei der Ausführung gemäß Fig. 8 wird das aus Messing (Ms) bestehende Anschlussteil 14 mit dem aus Kunststoff (KST) bestehenden Manschettenteil 16 verschraubt, wobei es sich bei dem Gewinde G um ein Gewinde gemäß DE 44 23 805 B4 handeln kann. Diese Ausführung zeichnet sich besonders durch eine kurze Ausführung des Messingteils und kleine Ausgangsdurchmesser aus. Dieser steck verbinder ist nicht erfindungsgemäß.

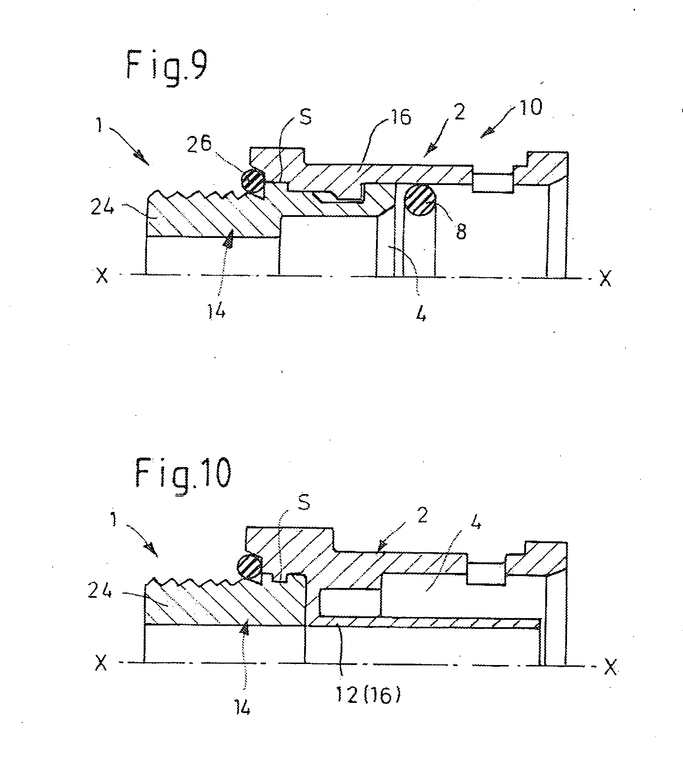

Weitere mögliche Ausführungsformen der Erfindung zeigen Fig. 9 und 10, die sich insbesondere durch eine verschiedenartige Gestaltung der Teilung des Gehäusteiles bzw. des Spaltes S zwischen Aufnahme- bzw. Manschettenteil 16 und das Baisteil 10 bzw. Anschlußteil 14 unterscheiden, wobei sie gleichzeitig verdeutlichen, dass das Gehäuseteil 2, insbesondere dessen Manschettenteil 16 und das Anschlußteil 14, erfindungsgemäß in ganz verschiedenartiger Weise aufgebaut sein kann bzw. sein können. So übernimmt in der Fig. 10 dargestellten Ausführung das Manschettenteil 16 gleichzeitig die Funktion der Stützhülse 12.

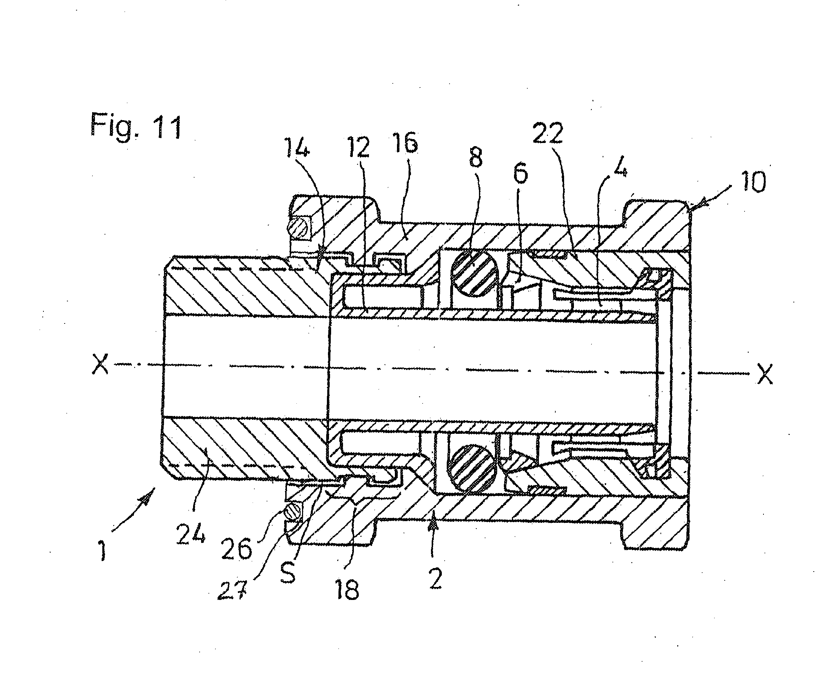

Fig. 11 zeigt eine weitere Ausführungsform der Erfindung, die sich insbesondere durch die Anordnung der zusätzlichen Dichtung 26 von den vorhergehend dargestellten Ausführungen unterscheidet. Der Steckverbinder 1 ist dabei wie die anderen Ausführungen der Erfindung dazu bestimmt, an ein (nicht dargestelltes) Aggregat angeschlossen, insbesondere dort in eine Einschrauböffnung eingeschraubt zu werden. Das Gehäuseteil 2 des Steckverbinders, insbesondere dabei dessen Aufnahmeteil 16, ist dabei - wie bei den anderen Ausführungen - mit seiner insbesondere flanschartig ausgebildeten Stirnseite parallel zur Oberfläche des Aggregats ausgerichtet, so dass es im maximal eingeschraubten Zustand an dieser Oberfläche zur Anlage kommen kann. Die zusätzliche Dichtung 26 ist dabei in einer stirnseitig angeordneten kreisringförmigen

Nut 27 angeordnet und dichtet bei Vorliegen des Montagezustandes des Steckverbinders 1 einen Spalt zwischen der Stirnfläche des Steckverbinders 1 und dem Aggregat ab. Dieser Spalt ist im montierten Zustand die Fortsetzung des möglichen Leckageweges zwischen dem Einschraubstutzen 24 und dem Aufnahmeteil 16. Um das Aufnahmeteil 16 erfindungsgemäß gegenüber dem Aggregat abdichtbar zu gestalten, muss also nicht in jedem Fall die zusätzliche Dichtung 26 unmittelbar im Spaltbereich bzw. am Spaltende zwischen dem Einschraubstutzen 24 und dem Aufnahmeteil 16 angeordnet werden, wie dies die anderen Ausführungen zeigen.

Gemäß Fig. 1 bis 6 wirkt das Halteelement 6 mit einem Innenkonus eines zusätzlichen Einsatzteils 22 zusammen, wobei die gegenseitige Befestigung z. B. über eine schnappbare Formschlussverbindung erfolgen kann. Es fällt auch in den Rahmen der Erfindung, wenn ein solches Einsatzteil 22 nicht vorhanden ist. Seine Funktionen, wie die Stützung des Halteelementes 6 können, zumindest teilweise, von einem nach der Art eines Überwurfelementes ausgebildeten Manschettenteil 16 übernommen werden. Grundsätzlich kann ein kraft-/formschlüssig wirkendes Halteelement wie beispielsweise das Halteelement 6 in Fig. 1, aber auch ein formschlüssiges Halteelement (vgl. Fig. 7 und 8) zum Einsatz kommen. Dabei ist sowohl das Prinzip "Halten vor Dichten" als auch "Dichten vor Halten" möglich.

Die Erfindung ist nicht auf die dargestellten Ausführungsbeispiele beschränkt, sondern umfaßt auch alle im Sinne der Erfindung gleichwirkenden Ausführungen, wie dies bereits durch die unterschiedlichen dargestellten konstruktiven Ausführungsformen Formen der verschiedenen Bauteile deutlich wird. Was diese möglichen gleichwirkenden Ausführungen der Bauteile betrifft, wird insbesondere auf die eingangs genannten Dokumente EP 0 753 698 B1, EP 0 733 844 B1 und DE 203 19 959 U1 in vollem Umfang verwiesen.

### Bezugszeichen

- 1: Steckverbinder
- 2: Gehäuseteil (besteht aus 10 und 16)
- 4: Steckaufnahme von 2
- 6: Halteelement
- 8: Mediendichtung
- 10: Basisteil von 2
- 12: Stützhülse
- 14: Anschlussteil (= Einschraubstutzen 24) von 10
- 16: Aufnahmeteil von 10 für 8
- 18: Rastbereich von 16
- 20: Muffenabschnitt von 16
- 22: Einsatzteil von 2
- 24: Einschraubstutzen (= 14)
- 26: zusätzliche Dichtung
- 27: Nut für 26 in 2 (16)

- G: Gewinde auf 14 (Fig. 8)
- K: Außenkontur von 14 (Fig. 7)
- KST: Kunststoff
- Ms: Messing
- S: Spalt zwischen 14 und 16
- X-X: Längsachse von 1

## Patentansprüche

1. Steckverbinder (1) für insbesondere aus Kunststoff bestehende Rohrleitungen, bestehend aus einem Gehäuseteil (2) mit einer Steckaufnahme (4) zum mediendichten Einstecken eines rohrstückförmigen Einsteckteils und zur Aufnahme einer Mediendichtung (8) und mindestens eines Halteelementes (6) zum Arretieren des Einsteckteils, wobei das Gehäuseteil (2) zweiteilig aus einem Aufnahmeteil (16) für das Halteelement (6) und die Mediendichtung (8) sowie aus einem aus Metall bestehenden Anschlussteil (14) zur Anschlussverbindung des Gehäuseteils (2) an ein Aggregat besteht, wobei das Anschlussteil (14) und das Aufnahmeteil (16) über axial ineinandergreifende Verbindungsabschnitte kraft-, form- und/oder stoffschlüssig miteinander verbunden oder verbindbar sind und wobei das Gehäuseteil (2) derart geteilt ist, dass das Aufnahmeteil (16) unmittelbar gegenüber dem Aggregat abdichtbar ist, indem eine Dichtung (26) gleichzeitig auch einen Spalt zwischen dem Anschlussteil (14) und dem Aufnahmeteil (16) des Gehäuseteils (2) abdichtet, **dadurch gekennzeichnet, dass** das Anschlussteil (14) und das Aufnahmeteil (16) verdrehfest miteinander verbunden sind, indem das Anschlussteil (14) und das Aufnahmeteil (16) im Bereich der Verbindungsabschnitte verrastet oder verpresst sind, wobei das Aufnahmeteil (16) aus Kunststoff (KST) besteht.

2. Steckverbinder nach Anspruch 1,
**dadurch gekennzeichnet, dass** das Anschlussteil (14) einen äußeren Verbindungsabschnitt (24) zur über die Dichtung (26) abgedichteten Anschlussverbindung des Gehäuseteils (2) an das Aggregat aufweist.

3. Steckverbinder nach Anspruch 1 oder 2,
**dadurch gekennzeichnet, dass** der Spalt ausgehend von einem in der Steckaufnahme (4) liegenden Ende - zumindest teilweise - als sich umfangsgemäß um das Anschlussteil (14) erstreckender Spalt ausgebildet ist, wobei die Dichtung (26) im Bereich des anderen Endes des Spalts angeordnet oder platzierbar ist.

4. Steckverbinder nach einem der Ansprüche 1 bis 3,
**dadurch gekennzeichnet, dass** das Anschlussteil (14) aus Messing (Ms) besteht.

## Claims

1. A plug connector (1) for tubes in particular for tubes consisting of plastics, consisting of a housing part (2) with a plug socket (4) for the media-tight plugging-in of a plug-in part in the form of a pipe piece and for the receiving of a media seal (8) and of at least one holding element (6) for the locking of the plug-in part, wherein the housing part (2) is in two parts comprising a receiving part (16) for the holding element (6) and the media seal (8) as well as a metal joining part (14) for the joining connection of the housing part (2) to a unit, wherein the joining part (14) and the receiving part (16) are connected or connectable to one another via axially engaging connecting portions in a force-locked, form-locked and/or material-locked manner and wherein the housing part (2) is divided in such a manner that the receiving part (16) is directly sealable with respect to the unit in that a seal (26) simultaneously also seals a gap between the joining part (14) and the receiving part (16) of the housing part (2), **characterised in that** the joining part (14) and the receiving part (16) are connected to one another so as to be secured against relative rotation, **in that** the joining part (14) and the receiving part (16) are locked together or pressed together in the region of the connecting portions, wherein the receiving part (16) consists of a plastic material (KST).

2. A plug connector according to claim 1, **characterised in that** the joining part (14) has an outer connecting portion (24) for the joining connection, sealed by the seal (26), of the housing part (2) to the unit.

3. A plug connector according to claim 1 or 2, **characterised in that** starting from an end lying in the plug socket (4), the gap is - at least partially - in the form of a gap extending circumferentially around the joining part (14), wherein the seal (26) is arranged or can be placed in the region of the other end of the gap.

4. A plug connector according to any one of claims 1 to 3, **characterised in that** the joining part (14) consists of brass (Ms).

## Revendications

1. Raccord enfichable (1) pour des conduites tubulaires réalisées en particulier en matière plastique, formé par un boîtier (2) avec un logement d'enfichage (4) destiné à l'enfichage étanche aux fluides d'un élément tubulaire à enficher et destiné à recevoir une garniture d'étanchéité (8) et au moins un élément de retenue (6) pour arrêter l'élément à enficher, le boîtier (2) en deux parties étant formé par une partie de réception (16) pour l'élément de retenue (6) et la garniture d'étanchéité (8), ainsi que par une partie de raccordement (14) réalisée en métal et destinée au raccordement du boîtier (2) à une unité, dans lequel la partie de raccordement (14) et la partie de réception (16) sont assemblées ou peuvent être assemblées l'une à l'autre par un assemblage par force, par conjugaison de forme et/ou par adhérence de matière, par l'intermédiaire de tronçons de jonction engagés axialement l'un dans l'autre, et le boîtier (2) étant divisé de telle sorte que la partie de réception (16) peut être rendue étanche directement par rapport à l'unité par l'intermédiaire d'une garniture d'étanchéité (26) qui assure en outre en même temps l'étanchéité d'une fente entre la partie de raccordement (14) et la partie de réception (16) du boîtier (2),
**caractérisé en ce que** la partie de raccordement (14) et la partie de réception (16) sont assemblées entre elles de manière immobile en rotation, parce que la partie de raccordement (14) et la partie de réception (16) sont bloquées ou comprimées dans la zone des tronçons de jonction, la partie de réception (16) étant réalisée en matière plastique (KST).

2. Raccord enfichable selon la revendication 1,
**caractérisé en ce que** la partie de raccordement (14) comporte un tronçon de jonction (24) extérieur pour le raccordement, rendu étanche par la garniture d'étanchéité (26), du boîtier (2) à l'unité.

3. Raccord enfichable selon la revendication 1 ou 2,
**caractérisé en ce que** la fente, à partir d'une extrémité située dans le logement d'enfichage (4), est réalisée - au moins en partie - sous la forme d'une fente s'étendant sur le pourtour autour de la partie de raccordement (14), dans lequel la garniture d'étanchéité (26) est disposée ou peut être positionnée dans la zone de l'autre extrémité de la fente.

4. Raccord enfichable selon l'une quelconque des revendications 1 à 3, **caractérisé en ce que** la partie de raccordement (14) est réalisée en laiton (Ms).
